# FASCICULE DE BREVET EUROPEEN

(11) **EP 0 669 425 B1**
(45) Date de publication et mention de la délivrance du brevet: **06.05.1998**
(21) Numéro de dépôt: 95400345.5
(22) Date de dépôt: 17.02.1995
(51) Int. Cl.: E01C 7/26, E01C 19/10, C08L 95/00

(54) **Enrobé bitumineux contenant un matériau composite et procédé d'obtention d'un tel enrobé**
Bituminöses Mischgut, enthält: Verbundwerkstoff und Verfahren zur dessen Herstellung
Bituminous mixture comprising a composite material and method for making it

(30) Priorité: 17.02.1994 FR 9401832
(43) Date de publication de la demande: 30.08.1995
(73) Titulaire: COLAS S.A., F-92653 Boulogne-Billancourt Cédex (FR)
(72) Inventeur: Godard, Eric, F-78180 Montigny-le-Bretonneux (FR)
(74) Mandataire: Michelet, Alain

(56) Documents cités:
- EP-A- 0 014 646
- EP-A- 0 049 485
- EP-A- 0 356 066
- CH-A- 539 003
- DE-A- 4 022 877
- FR-A- 2 228 894
- US-A- 4 548 962
- DATABASE WPI Week 2793 Derwent Publications Ltd., London, GB; AN 93-217028 & JP-A-05 140 464 (DAINIPPON) , 8 Juin 1993

## Description

L'invention concerne un enrobé bitumineux à chaud comprenant un matériau composite armé de fibres. L'invention concerne également un procédé de fabrication d'un tel enrobé bitumineux et un procédé de réalisation d'une bande de roulement avec un tel enrobé.

Le développement de l'enrobé bitumineux, objet de la présente invention, répond à deux besoins différents.

D'une part, on cherche à améliorer encore plus la sécurité et le confort des routes en améliorant le contact entre les pneumatiques et la couche de roulement de la route sans pour autant augmenter l'usure des pneumatiques par exemple par une trop forte rugosité de la couche de roulement.

A l'objectif d'amélioration de la sécurité et du confort de la circulation routière, on doit aussi ajouter la facilité d'entretien des routes.

En effet, la bonne adhérence des pneumatiques sur la route ne dépend pas seulement des matériaux choisis pour faire une couche de roulement remplissant les conditions d'un cahier de charges définies. Elle dépend aussi de l'entretien de cette route, et notamment de la couche de roulement, de la réparation des déformations que la route subit avec le temps et de sa résistance au phénomène d'ornièrage.

Un asphalte, destiné à constituer un revêtement routier, comprenant des particules d'un matériau composite broyé comportant des fibres, est déjà connu du document : DATABASE WPI, Week 2793 Derwent Publications Ltd., London, GB; AN 93-217028 & JP-A-05 140 464 (DAINIPPON), 8 Juin 1993; voir abrégé.

D'autre part, il s'agit de recycler aussi bien des pièces réalisées en un matériau composite, comme par exemple des pièces usagées en polyester armé de fibres de verre, que les déchets de production de telles pièces.

La réutilisation de matériaux composites, d'origines diverses, et l'utilisation de pièces ou de déchets de production en polyester ou en d'autres résines thermoplastiques réticulables ou en résines thermodurcissables, armées de fibres de verre, de carbone, de Kevlar marque déposée, ou autres, visent actuellement encore des pièces qui n'ont pas été conçues et fabriquées en prenant en compte la possibilité d'une réutilisation, au moins partielle, ultérieure, et la nécessité du respect de l'environnement.

Le but de l'invention est de proposer un enrobé bitumineux qui permette le recyclage de matériaux composites armés de fibres.

Principalement, l'invention doit permettre un recyclage avantageux de pièces en résines thermoplastiques réticulables ou en résines thermodurcissables armés de fibres de verre, de carbone, de Kevlar ou autres.

Ce problème est résolu par la combinaison des caractéristiques de la revendication 1.

L'invention a ainsi pour objet un enrobé bitumineux à chaud destiné à constituer un revêtement routier, comprenant comme liant un bitume classique ou un bitume modifié et des granulats comportant des gravillons et une fraction sableuse.

Conformément à l'invention, une partie des granulats est remplacée par un matériau composite broyé comportant des fibres.

Les formules d'enrobé bitumineux définissent de manière usuelle les dimensions et les proportions de granulats, gravillons et fraction sableuse.

Selon l'invention, ces formules usuelles sont appliquées. Le matériau composite n'est donc pas ajouté à une composition standard mais vient en substitution d'une partie des granulats.

L'enrobé ainsi obtenu est destiné à être appliqué à chaud à l'aide d'un finisseur.

Le liant de la couche d'accrochage peut être une émulsion de bitume pur ou une émulsion de bitume modifié par des polymères.

Le choix de la granulométrie est fait au vu du remplacement, par le matériau composite, soit d'une partie des gravillons, soit d'une partie de la fraction sableuse constituant le granulat du bitume.

L'invention concerne les caractéristiques ci-après:
- Le pourcentage de matériau composite dans le mélange granulats-matériau composite est compris entre 0,2% et 10%. Les particules ont une taille comprise entre 0 et 100 µm.

Pour la disposition énoncée ci-avant, le matériau composite mélangé au béton bitumineux pour obtenir l'enrobé bitumineux de l'invention, peut provenir de déchets de l'industrie employant ce type de matériau. Ces déchets peuvent être des objets en tous genres et de toutes dimensions et de toutes épaisseurs. Le matériau composite peut également provenir de la récupération d'objets fabriqués en un tel matériau.

L'utilisation d'un matériau composite mélangé à un bitume classique ou modifié peut être envisagée selon le mode de recyclage suivant :

Un recyclage à faible taux est possible avec des déchets (environ 6000 tonnes disponibles en France, par an), sans altération significative des propriétés de l'enrobé, si l'on emploie ceux-ci sous une forme plus élaborée, c'est-à-dire sous forme d'un matériau composite broyé dont les grains ont une taille inférieure à 100 µm. On peut alors produire un enrobé ayant des propriétés proches de celles obtenues avec des fibres de verre ou de polyester neuves et notamment une amélioration des propriétés des résistances à l'orniérage et à la fatigue de l'enrobé.

A l'intérêt de la consommation de déchets industriels s'ajoute surtout dans le cas du recyclage à faible taux, l'obtention de meilleures propriétés mécaniques à moindre coût qu'avec des fibres "neuves". Dans les deux cas, l'enrobé doit contenir un peu plus de bitume qu'à l'ordinaire (plus 0,1% à plus 0,8% selon les cas).

Dans des modes de réalisation préférés, le matériau composite est:
- soit une résine thermoplastique réticulable ou thermodurcissable, armé de fibres de verre, de carbone ou de Kevlar,
- soit du polyester armé de fibres de verre, de carbone ou de Kevlar,
- soit encore un mélange de ces deux composites.

Ainsi l'enrobé bitumineux de l'invention permet de réutiliser les déchets de matériaux composites tels que par exemple du polyester armé de fibres de verre, par simple broyage. La granulométrie du produit est obtenue par un broyage plus ou moins poussé. Il est possible d'incorporer le matériau composite broyé dans un béton bitumineux semi-grenu et dans un béton bitumineux mince. Il est également possible d'incorporer le matériau composite à des bétons bitumineux très minces, ultra-minces, voir drainants sous la forme fillerisée.

Il en résulte alors la possibilité de produire des enrobés classiques de type béton bitumineux semi-grenu ou béton bitumineux mince ainsi que des graves bitumes pour les mêmes emplois que les produits classiques correspondants.

L'emploi du matériau composite broyé sous sa forme fillerisée peut également être envisagé dans des mélanges de type sable enrobé ayant pour fonction, soit l'étanchéité d'un ouvrage, soit le ralentissement de l'apparition de fissures existantes dans les couches inférieures de la chaussée vers la couche de roulement. Dans ce cas, le taux d'emploi est plus important que dans le cas des enrobés pour couche de roulement et peut atteindre des valeurs de 10%. Une autre application possible est l'incorporation à un asphalte coulé dont la fonction est de former l'étanchéité d'un ouvrage ou de constituer une couche de surface. Dans tous les cas, l'emploi de fines de cette nature permet d'augmenter les performances mécaniques des produits considérés.

Le recyclage d'un matériau composite élaboré fin à faible taux apporte par ailleurs des propriétés qui prédisposent l'enrobé bitumineux résultant à un emploi pour des chaussées à fort trafic ou sur des chaussées particulièrement agressées.
- Avantageusement l'enrobé bitumineux est répandu en une couche de roulement mince d'une route, l'épaisseur de la couche étant comprise entre 1,5 cm et 8 cm.
- L'enrobé bitumineux est répandu en une couche de base destinée à recevoir une couche de roulement, la couche de base ayant une épaisseur comprise entre 7 cm et 20 cm.
- L'enrobé bitumineux de type sable enrobé est répandu en une couche de liaison de 1 à 3 cm destinée à recevoir une couche de roulement, la couche de liaison assurant l'étanchéité de la chaussée ou pouvant éviter la remontée des fissures existantes ou pouvant prendre naissance dans les couches inférieures.
- L'enrobé de type asphalte coulé est destiné à constituer une couche d'étanchéité ou de surface.

L'invention a également pour objet un procédé de fabrication d'un enrobé selon les caractéristiques de la revendication 8.

Selon différents modes de réalisation, le procédé de fabrication de l'enrobé bitumineux présente également les caractéristiques ci-après, considérées isolément ou selon toutes leurs combinaisons techniquement possibles:
- Le matériau composite est introduit dans le malaxeur en sacs thermofusibles.
- Le matériau composite est introduit dans le malaxeur en fin de séchage.

L'invention a également pour objet un procédé de réalisation d'une couche de roulement d'une route avec un enrobé bitumineux à chaud comprenant comme liant un bitume classique ou un bitume modifié et des granulats comprenant des gravillons et une fraction sableuse, ayant des diamètres moyens respectivement compris dans des plages de valeurs discontinues et la fraction sableuse ayant un volume inférieur au volume interstitiel des gravillons.

Conformément à l'invention, le procédé de réalisation d'un revêtement routier comprend les étapes de répandage d'une couche d'accrochage sur la route destinée à recevoir le revêtement routier, l'étape de répandage d'une couche dudit enrobé bitumineux et l'étape de compactage de cette couche d'enrobé bitumineux.

D'autres caractéristiques et avantages de l'invention ressortiront de la description d'exemples de réalisation de l'enrobé de l'invention et d'un exemple de mise en oeuvre du procédé de fabrication de l'enrobé bitumineux selon l'invention.

Les tableaux I et II présentent différents exemples d'enrobés bitumineux selon l'invention.

Plus particulièrement, le tableau I présente une synthèse des résultats d'essais effectués sur un échantillon témoin 01 en un béton bitumineux semi-grenu utilisé jusqu'ici et sur quatre échantillons 02 à 05 en des bétons bitumineux semi-grenus 0/10 selon l'invention.

L'échantillon témoin a été obtenu en mélangent des granulats dont 36% appartiennent à la classe de taille 6/10, 26% appartiennent à la classe de taille 2/6 et 38% appartiennent à la classe de taille 0/2, avec un liant de la classe 60/70. Le pourcentage de liant dans ce mélange est 5,6% et la masse volumique (M.V.R.) du mélange est de l'ordre de 2.654 kg/m³ et le module de richesse de l'enrobé K, qui est une mesure pour la quantité de bitume par rapport à la surface développée des granulats, est 3,72.

Les échantillons de bétons bitumineux selon l'invention, référencés 02 à 05, ont été obtenus en remplaçant dans le mélange indiqué ci-avant pour l'échantillon témoin, une partie des granulats de classe 0/2 par des granulats de polyester armé de fibres de verre broyé de deux origines différentes, désignés par fibre 1 et fibre 2. Ainsi, les échantillons 02 et 03 contiennent respectivement 2% ou 4% de polyester d'origine fibre 1 alors que les échantillons 04 et 05 contiennent respectivement 2% ou 4% de polyester d'origine fibre 1.

En ce qui concerne le pourcentage de liant, il se trouve légèrement augmenté, par rapport à l'échantillon témoin, pour les échantillons 02, 03 et 05, alors qu'il est de la même valeur pour l'échantillon 04.

Les échantillons 02 à 05 et l'échantillon témoin 01 ont été soumis chacun à trois essais différents. D'une part, ils ont été soumis à un essai de compactibilité dans une presse à cisaillement giratoire. Cet essai, référencé P.C.G., sert à apprécier l'aptitude au compactage d'un enrobé lors de sa mise en oeuvre. Pendant l'essai, l'échantillon est soumis à la fois à une compression et à un pétrissage de façon telle que l'axe de l'échantillon décrit un cône. Dans le tableau I, la compacité C est exprimée en %, les indices 1, 10, 40 et 200 indiquant le nombre de girations effectuées.

D'autre part, les échantillons 02 à 05 et l'échantillon témoin 01 ont été soumis chacun à l'étude Duriez selon la norme NF P98-251-4, destinée à définir la résistance mécanique des échantillons. Dans le tableau I, Rc est défini comme la résistance mécanique à la compression, d'un échantillon (ou d'une éprouvette) ayant séjourné sept jours dans une étuve régulée à 18°C. Le coefficient Ri/c représente le rapport entre la résistance mécanique de l'éprouvette correspondante ayant séjourné sept jours dans un bain d'eau également à 18°C par rapport à la valeur de résistance mécanique de cette éprouvette ayant séjourné sept jours dans une étuve régulée à 18°C. Le coefficient Ri/c est une caractéristique de la sensibilité à l'eau de la résistance mécanique des enrobés.

Par ailleurs, les échantillons 02 à 05 et l'échantillon témoin 01 ont été soumis chacun à un essai d'orniérage. Cet essai consiste à mesurer la profondeur d'une ornière provoquée par le passage répété d'une roue sur un échantillon d'enrobé. La profondeur est exprimée en % de l'épaisseur normalisée (10 cm) de l'échantillon.

Les valeurs rapportées dans le tableau I indiquent que le matériau enrobé selon l'invention présente des caractéristiques mécaniques proches de celles de l'enrobé utilisé jusqu'à ce jour.

Le tableau II représente une synthèse des résultats d'essais effectuée sur un échantillon témoin 06 en un béton bitumineux mince 0/10 utilisé jusqu'ici et sur des échantillons 07 et 08 fabriqués selon l'invention en des bétons bitumineux minces 0/10 contenant respectivement 2% ou 4% de granulats de polyester armé de fibres de verre broyé.

L'échantillon témoin a été obtenu en mélangeant des granulats dont 66% appartiennent à la classe de taille 6/10, 33% appartiennent à la classe de 0/2 et 1% est un filler MEAC. A ce mélange, on a ajouté 5,8% de liant pour obtenir des enrobés d'une masse volumique réelle M.V.R. de 2.645 et d'un module de richesse de l'enrobage K de 3,9.

Les échantillons 07 et 08 diffèrent de l'échantillon témoin 06 en ce que une partie des granulats de classe de taille 0/2 ont été remplacés respectivement par 2% ou 4% de granulats de polyester. Le pourcentage de liant de classe 60/70 est resté inchangé, à savoir 5,8%. Les masses volumiques réelles et les modules de richesse de l'enrobage sont du même ordre de grandeur que les valeurs correspondantes de l'échantillon témoin 06.

Les échantillons (ou éprouvettes) ont été soumis aux trois essais décrits plus haut, à savoir aux essais de compactibilité dans une presse à cisaillement giratoire pour définir leur compacité à l'étude Duriez, pour définir la résistance mécanique des échantillons et à des essais d'orniérage.

Les valeurs rapportées dans le tableau II indiquent que le matériau enrobé selon l'invention présenté sous forme de béton bitumineux mince a des caractéristiques mécaniques proches de celles de l'enrobé utilisé jusqu'à présent, et que la résistance au phénomène d'ornièrage est améliorée.

Afin de mettre en évidence l'intérêt d'employer le matériau composite sous sa forme broyée à des tailles de particules inférieure à 100 µm, un échantillon d'un tel matériau appelé "poudre Fibre 1" a été soumis à l'essai normalisé (NF 98-256-1) de pouvoir absorbant des fines, et le résultat a été comparé à des fines calcaires couramment utilisées pour la confection d'enrobés.

Cet essai consiste à mesurer la quantité de fines nécessaire pour absorber 15 grammes de bitume 50/70 dans des conditions standard définies à une température de 150°C.

Pour des fines calcaires classiques, la masse de fines nécessaire est de 49 grammes. Pour la poudre Fibre 1, cette quantité est de 40 grammes. Cette poudre est donc sensiblement plus absorbante que les fines calcaires. Cette propriété associée à la forme allongée et au caractère fibreux de ce produit lui confère donc un pouvoir structurant sensiblement plus important.

**TABLEAU I**

| N° | 01 | 02 | 03 | 04 | 05 |
|---|---|---|---|---|---|
| FORMULES | TEMOIN | 2% Fibre 1 | 4% Fibre 1 | 2% Fibre 2 | 4% Fibre 2 |
| 6/10 MEILL. | 36% | 36% | 36% | 36% | 36% |
| 2/10 MEILL. | 26% | 26% | 26% | 26% | 26% |
| 0/2 MEILL. | 38% | 36% | 34% | 36% | 34% |
| Fibre 1 | / | 2% | 4% | / | / |
| Fibre 2 | / | / | / | 2% | 4% |

| Liant | 60/70 PC | | | | |
|---|---|---|---|---|---|
| % DE LIANT | 5,6 | 5,8 | 6,0 | 5,6 | 6,2 |
| M.V.R.kg/m³ | 2.654 | 2.623 | 2.592 | 2.630 | 3.584 |
| K (> 3,5) | 3,72 | 3,83 | 3,94 | 3,69 | 4,06 |

| P.C.G. | | | | | |
|---|---|---|---|---|---|
| Cl | 77,4 | 76,8 | 77,0 | 77,2 | 76,5 |
| C10(<89%) | 85,8 | 84,9 | 85,0 | 85,6 | 84,6 |
| C60(91-96%) | 92,3 | 91,3 | 91,2 | 92,2 | 90,9 |
| C200 | 86,6 | 95,5 | 95,4 | 96,6 | 95,0 |

| DURIEZ LCPC | | | | | |
|---|---|---|---|---|---|
| COMPACITE (91-95%) | 89,3 | 86,9 | 85,3 | 87,7 | |
| Rc (> 6 Mp) | 9,13 | 7,47 | 5,98 | 8,53 | |
| R i/c (> = 0.75) | 0,94 | 0,80 | 0,78 | 0,80 | |

| ORNIERAGE | | | | | |
|---|---|---|---|---|---|
| COMP.GEO.% | 92,0 | 92,1 | 92,0 | 93,0 | |
| ORNIERE (%) | | | | | |
| 1000 | 2,3 | 2,5 | 2,8 | 2,2 | |
| 3000 | 3,0 | 3,1 | 3,3 | 2,6 | |
| 10000 | 3,8 | 3,8 | 4,0 | 3,1 | |
| 30000(<=10% | 4,6 | 4,5 | 4,8 | 3,6 | |
| 100000 | 6,2 | 5,6 | 5,5 | 4,6 | |

**TABLEAU II**

| N° | 06 | 07 | 08 |
|---|---|---|---|
| FORMULES | TEMOIN | + 2% Fibre 1 | + 4% Fibre 1 |
| FORMULATION | 6/10: 66% | 6/10: 66% | 6/10: 66% |
| | 0/2 : 33% | 0/2 : 31% | 0/2 : 29% |
| | MEAC: 1% | MEAC: 1% | MEAC: 1% |
| | | Fibre 1: 2% | Fibre 1: 4% |

| LIANT | 60/70 PC | | |
|---|---|---|---|
| % de LIANT | 5,8 | 5,8 | 5,8 |
| M.V.R.kg/m³ | 2.645 | 2.622 | 2.599 |
| K (>3.6) | 3,90 | 3,88 | 3,86 |

| P.C.G. | | | |
|---|---|---|---|
| Cl | 78,8 | 78,4 | 77,2 |
| Cl0(<=91%) | 87,8 | 87,4 | 85,4 |
| C40(88-94%) | 93,3 | 92,8 | 90,3 |
| C200 | 99,6 | 99,1 | 96,0 |

| DURIEZ LCPC | | | |
|---|---|---|---|
| COMPACITE | 90,8 | 86,9 | 84,8 |
| Rc (Mp) | 8,78 | 6,82 | 6,23 |
| Ri/c(>=8.8) | 0,94 | 0,96 | 0,83 |

| ORNIERAGE | | | |
|---|---|---|---|
| COMP.GEO % | 94,8 | 95,6 | |
| | | | |
| ORNIERE (%) | | | |
| 1000(<=10%) | 3,7 | 3,7 | |
| 3000(<=20%) | 4,6 | 4,4 | |
| 10000 | 5,4 | 5,0 | |
| 30000 | 6,0 | 5,9 | |
| 100000 | 7,0 | 6,0 | |

## Revendications

1. Enrobé bitumineux à chaud destiné à constituer un revêtement routier, comprenant comme liant un bitume classique ou un bitume modifié et des granulats comprenant des gravillons et une fraction sableuse, une partie des granulats étant remplacée par des particules d'un matériau composite broyé comportant des fibres, le pourcentage de matériau composite dans le mélange granulats-matériau composite étant compris entre 0,2 % et 10 % et les particules ayant une taille comprise entre 0 et 100 µm.

2. Enrobé selon la revendication 1, caractérisé en ce que le matériau composite est une résine thermoplastique réticulable ou thermodurcissable armé de fibres de verre, de carbone ou de Kevlar.

3. Enrobé selon la revendication 1 ou 2, caractérisé en ce que le matériau composite est du polyester armé de fibres de verre, de carbone ou de Kevlar.

4. Enrobé selon l'une quelconque des revendications 1 à 3, caractérisé en ce qu'il est répandu en une couche de roulement mince d'une route, l'épaisseur de la couche étant comprise entre 1,5 cm et 8 cm.

5. Enrobé selon l'une quelconque des revendications 1 à 3, caractérisé en ce qu'il est répandu en une couche de base destinée à recevoir une couche de roulement, la couche de base ayant une épaisseur comprise entre 7 cm et 20 cm.

6. Enrobé de type sable enrobé selon l'une quelconque des revendications 1 à 3, caractérisé en ce qu'il est répandu en une couche de liaison de 1 à 3 cm destinée à recevoir une couche de roulement, la couche de liaison assurant l'étanchéité de la chaussée et évitant la remontée des fissures existantes ou pouvant prendre naissance dans les couches inférieures.

7. Enrobé de type asphalte coulé selon l'une quelconque des revendications 1 à 3, destiné à constituer une couche d'étanchéité ou de surface.

8. Procédé de fabrication d'un enrobé bitumineux à chaud destiné à constituer un revêtement routier et comprenant comme liant un bitume classique ou un bitume modifié, l'enrobé bitumineux comportant des granulats comprenant des gravillons et une fraction sableuse, le procédé comprenant l'étape de porter les granulats à la température d'enrobage, de porter le liant à la température d'enrobage et de malaxer les granulats et le liant en vue de produire l'enrobé bitumineux, un matériau composite broyé dont les particules ont un diamètre moyen compris entre 0 et 100 µm et qui est à température ambiante, étant ajouté, pendant le malaxage, au mélange granulats-bitume déjà porté à la température d'enrobage ou dans les granulats avant introduction du bitume, le matériau composite étant introduit au malaxeur en fin de séchage.

9. Procédé selon la revendication 8, mise en oeuvre dans une centrale de fabrication discontinue, caractérisé en ce que le matériau composite est introduit au malaxeur en sacs thermofusibles.

10. Procédé de réalisation d'un revêtement routier avec un enrobé bitumineux selon l'une quelconque des revendications 1 à 7 ou obtenu par la mise en oeuvre d'un procédé de fabrication selon l'une quelconque des revendications 8 et 9, comprenant les étapes de répandage d'une couche d'accrochage sur la route destinée à recevoir le revêtement routier, répandage d'une couche dudit enrobé bitumineux et compactage de cette couche d'enrobé bitumineux.

## Patentansprüche

1. Bituminöses Heiß-Mischgut für einen Straßenbelag, als Bindemittel klassisches Bitumen oder modifiziertes Bitumen und zuschlagstoffe umfassend, die Split und einen Sandanteil enthalten, wobei ein Teil der Zuschlagstoffe durch Teilchen aus gemahlenem Verbundwerkstoff ersetzt ist, welcher Fasern einschließt, wobei der Prozentsatz Verbundwerkstoff in der Zuschlagstoff-Verbundstoffmischung zwischen 0,2 % und 10 % beträgt und die Teilchen eine Größe zwischen einschließlich 0 und 100 µm haben.

2. Mischgut nach Anspruch 1,
**dadurch gekennzeichnet,**
daß der Verbundwerkstoff ein thermoplastisch vernetzbarer Kunststoff oder ein wärmehärtbarer Kunstoff, verstärkt mit Glas-, Karbon- oder Kevlarfasern, ist.

3. Mischgut nach Anspruch 1 oder 2,
**dadurch gekennzeichnet,**
daß der Verbundwerkstoff aus Polyester, verstärkt mit Glas-, Karbon- oder Kevlarfasern, besteht.

4. Mischgut nach einem der Ansprüche 1 - 3,
**dadurch gekennzeichnet,**
daß es als eine dünne Fahrdecke einer Straße gegossen ist, wobei die Dicke der Decke zwischen einschließlich 1,5 cm und 8 cm liegt.

5. Mischgut nach einem der Ansprüche 1 - 3,
**dadurch gekennzeichnet,**
daß es als Grundschicht gegossen ist, die dazu bestimmt ist, eine Fahrdecke aufzunehmen, wobei die Grundschicht eine Dicke zwischen einschließlich 7 cm und 20 cm aufweist.

6. Mischgut des umhüllten Sandtyps nach einem der Ansprüche 1 - 3,
**dadurch gekennzeichnet,**
daß es als eine Verbindungsschicht von 1 bis 3 cm gegossen ist, die dazu bestimmt ist, eine Fahrdecke aufzunehmen, wobei die Verbindungsschicht die Dichtigkeit der Straße gewährleistet und das Wiederaufsteigen von Rissen vermeidet, die existieren oder in unteren Schichten entstehen können.

7. Mischgut des Asphalttyps nach einem der Ansprüche 1 - 3, dazu bestimmt, eine Dichtungsschicht oder Oberflächenschicht zu bilden.

8. Verfahren zur Herstellung eines bituminösen Heiß-Mischguts, das bestimmt ist, einen Straßenbelag zu bilden und als Bindemittel klassisches Bitumen oder modifiziertes Bitumen umfaßt, wobei das bituminöse Mischgut Zuschlagstoffe einschließt, die Split und einen Sandanteil umfassen, wobei das Verfahren den Schritt umfaßt, die Zuschlagstoffe auf die Umhüllungstemperatur zu bringen, das Bindemittel auf Umhüllungstemperatur zu bringen und die Zuschlagstoffe und das Bindemittel im Hinblick auf das Herstellen des bituminösen Mischguts zu kneten, wobei ein zerkleinerter Verbundwerkstoff, dessen Teilchen einen mittleren Durchmesser einschließlich zwischen 0 und 100 µm haben und der sich auf Umgebungstemperatur befindet, während des Knetens der Zuschlagstoff-Bitumenmischung, die bereits auf Umhüllungstemperatur gebracht ist, oder den Zuschlagstoffen vor dem Einbringen des Bitumens hinzugefügt wird , wobei der Verbundwerkstoff in dem Kneter am Ende des Trocknens eingegeben wird.

9. Verfahren nach Anspruch 8, ausgeübt in einer Zentrale chargenweiser Herstellung,
**dadurch gekennzeichnet,**
daß der Verbundwerkstoff dem Kneter in wärmeschmelzbaren Säcken zugeführt wird.

10. Verfahren zur Herstellung eines Straßenbelags mit einem bituminösen Mischgut nach einem der Ansprüche 1 - 7 oder erhalten durch Durchführung eines Herstellungsverfahrens nach einem der Ansprüche 8 und 9, umfassend die Schritte des Gießens einer Haftschicht auf der zur Aufnahme einer Straßendecke bestimmten Straße, Gießen einer Schicht des bituminösen Mischguts und Verdichten dieser Schicht aus bituminösen Mischgut.

## Claims

1. A hot bituminous mixture designed to constitute a road cover, comprising as a binder a conventional bitumen or a modified bitumen and granulates containing gravel and a sand fraction, whereas a portion of the granulates is replaced with particles of a crushed composite material containing fibres, whereby the percentage of composite material ranges from 0.2% to 10% and the size of the particles ranges from 0 to 100 µm.

2. A bituminous mixture according to claim 1, characterised in that the composite material is a thermoplastic cross-linkable or duroplastic resin, reinforced with fibreglass, carbon or Kevlar.

3. A bituminous mixture according to claim 1 or 2, characterised in that the composite material is polyester reinforced with fibreglass, carbon or Kevlar.

4. A bituminous mixture according to any of the claims 1 to 3, characterised in that it is spread in one thin road layer, whereby the thickness of the layer ranges from 1.5 to 8 cm.

5. A bituminous mixture according to any of the claims 1 to 3, characterised in that it is spread as a basic layer, designed for receiving a road layer, whereby the thickness of the basic layer ranges from 7 to 20 cm.

6. A coated sand-type mixture according to any of the claims 1 to 3, characterised in that it is spread as a 1-3 cm binding layer designed to receive a road layer, whereas the binding layer ensures tightness of the road and prevents the existing cracks from resurfacing or the birth of cracks in the lower layers.

7. A cast asphalt-type mixture according to any of the claims 1 to 3, designed to constitute a sealing or surface layer.

8. A method of producing a hot bituminous mixture designed to constitute a road cover and comprising as a binder a conventional bitumen or a modified bitumen, whereby the bituminous mixture comprises granulates containing gravel as well as a sand fraction, whereas the process consists in bringing the granulates to hot mix temperature, in bringing the binder to hot mix temperature and in kneading both granulates and binder in order to produce the bituminous mixture, a crushed composite material whose particles have an average diameter ranging from 0 to 100 µm and which is at room temperature, being then added, during the kneading phase, to the granulate/bitumen mixture already brought to hot mix temperature or to the granulates before introduction of the bitumen, whereas the said composite material is introduced into the mixer at the end of the drying time.

9. A process according to claim 8, implemented in a discontinuous manufacturing unit, characterised in that the composite material is introduced into the mixer in hot-meltable bags.

10. A manufacturing process for a road cover with a bituminous mixture according to any of the claims 1 to 7 or obtained by implementing a manufacturing process according to any of the claims 8 and 9, comprising the steps of spreading a sticking layer onto the road designed to receive the road cover, in spreading a layer of the said bituminous mixture and in compacting the said bituminous mixture layer.
